Europäisches Patentamt

**European Patent Office**

**Office européen des brevets**

(19)

(11) Numéro de publication: **0 115 991**
**B1**

# FASCICULE DE BREVET EUROPÉEN

(45) Date de publication du fascicule du brevet:
16.03.88

(51) Int. Cl.⁴: **B 60 T 13/18,** B 60 T 13/12,
B 60 R 17/00

(21) Numéro de dépôt: **84400179.2**

(22) Date de dépôt: **27.01.84**

(54) **Nouvelle application de la pompe de graissage d'un véhicule.**

(30) Priorité: **03.02.83 FR 8301681**

(43) Date de publication de la demande:
**15.08.84 Bulletin 84/33**

(45) Mention de la délivrance du brevet:
**16.03.88 Bulletin 88/11**

(84) Etats contractants désignés:
**AT BE CH DE FR GB IT LI LU NL SE**

(56) Documents cité:
**DE-A-1 928 620**
**DE-A-2 057 228**
**FR-A-1 012 245**
**FR-A-2 122 570**
**FR-A-2 402 564**
**FR-A-2 439 112**

(73) Titulaire: **Boisson, Edouard, 20, rue de Bourgogne**
**Nommay, F-25600 Sochaux (FR)**

(72) Inventeur: **Boisson, Edouard, 20, rue de Bourgogne**
**Nommay, F-25600 Sochaux (FR)**

(74) Mandataire: **Sauvage, Renée, CABINET SAUVAGE**
**100 bis, avenue de Saint- Mandé, F-75012 Paris**
**(FR)**

EP 0 115 991 B1

LIBER, STOCKHOLM 1988

## Description

La présente invention concerne un procédé de manoeuvre de la pression d'un fluide refoulé par une pompe en direction d'un circuit principal et d'un circuit secondaire, dans un véhicule ou une machine à moteur, ainsi qu'un dispositif pour la mise en oeuvre de ce procédé.

Plus précisément, l'invention se rapporte à un procédé qui consiste à réduire, jusqu'à éventuellement interrompre, la section de passage d'un premier fluide vers le circuit principal pour en augmenter la pression dans le circuit secondaire, en réponse a une force extérieure.

Cette force extérieure peut être la pression d'un second fluide, lorsque celle-ci excède un seuil prédéterminé et le circuit secondaire peut alimenter un récepteur quelconque.

Il est connu, d'après FR-A-2 402 564 FERODO, d'augmenter la pression dans un circuit d'assistance de freinage (45) d'un véhicule en détournant, au profit de ce circuit, un fluide refoulé par une pompe (28) qui, autrement, se borne à faire circuler ledit fluide selon une boucle fermée (31, 30, 28, 32, 37, 41). La circulation dans la boucle fermée est réduite ou interrompue par des moyens (29) sensibles à la sollicitation de la pédale de freins (25) et il est clair qu'en dehors des périodes de freinage où elle agit comme surpresseur, la pompe se limite à faire circuler le fluide dans la boucle fermée sans fonction propre.

La présente invention a pour but d'apporter un procédé du type précité qui ne nécessite pas l'usage d'une pompe de circulation et d'un circuit en boucle fermé spécialement affectés à la circulation du fluide dont la pression est manoeuvrée , mais qui donne un rôle supplémentaire à des moyens d'ores et déjà existants dans le véhicule ou dans la machine à moteur en réduisant ainsi l'encombrement, le poids et le coût de l'ensemble, par rapport à la solution de l'art antérieur, ainsi que la consommation d'énergie résultant de l'entraînement en permanence d'une pompe spécialement prévue.

Plus précisément, selon l'invention, le fluide dont la pression est manoeuvrée, la pompe assurant sa circulation et le circuit principal correspondant au circuit en boucle fermé de l'art antérieur, sont respectivement l'huile de graissage, la pompe à huile et le circuit de graissage du véhicule ou de la machine à moteur.

Le choix de cette solution, qui donne à la pompe à huile une triple fonction (graissage, surpresseur et, comme on le verra plus loin, ralentisseur ) et qui s'est avérée pleinement satisfaisante, a été fait en surmontant le préjugé qui incitait l'homme de métier à penser que l'on ne saurait sans dommage réduire ou interrompre la circulation de l'huile de graissage dans un véhicule ou une machine à moteur, préjugé qui a conduit à la solution du document FR-A-2 402 564 précité.

On notera qu'il était déjà venu à l'idée de l'homme l'art de mettre à contribution la pompe à huile d'un moteur pour alimenter un système d'assistance de freinage, mais dans ce cas la pompe à huile alimentait, en parallèle et à la même pression, le système d'assistance et le circuit de graissage.

Ce dernier système a connu un échec commercial du fait qu'il était trop onéreux, trop encombrant, peu sûr et surtout du fait qu'il était cause d'une augmentation de la consommation du moteur. En effet , lorsque l'on demande à une pompe à huile de débiter davantage à une pression égale ou légèrement supérieure, il est nécessaire de lui fournir une énergie supplémentaire, cela, en permanence. Au surplus, ce système utilisait des pressions de 3 à 4 atmosphère qui nécessitent des diamètres de cylindre dépassant le décimètre et, comme les précisions d'usinage sont à comparer à celles des vannes détendeurs, le prix s'en ressentait et les inconvénients l'emportaient sur les avantages.

On notera, en rapport avec ce qui précède le document DE-A-1 928 620 TELDIX qui est relatif à un véhicule comprenant une pompe à huile entraînée de façon continue par un moteur à combustion et qui assure le graissage du système et l'alimentation d'au moins un système hydraulique secondaire présent dans le véhicule, à partir de cette pompe à huile. Cependant dans le système décrit dans le document DE-A-1 928 620, la totalité de la pression que peut produire la pompe à huile est transmise au système hydraulique par coupure du circuit de graissage et, ce, en circuit fermé. Toutefois, pour ne pas avoir de coupures du graissage trop importantes, qui pourraient entraîner une destruction rapide du moteur, on envisage, dans le document précité, le recours à une pompe à débit excessif ou à une pompe auxiliaire, ainsi qu'à des systèmes hydrauliques secondaires ou récepteurs de faible ou très faible capacité.

Ces inconvénients sont écartés par la solution suivant l'invention qui concerne un procédé de manoeuvre de la pression de l'huile de graissage refoulée par une pompe à huile en direction d'un circuit de graissage, dans un véhicule ou une machine à moteur, qui consiste à dévier au moins une partie de l'huile de graissage vers un circuit secondaire pour augmenter la pression dans ledit circuit secondaire en réponse à une force extérieure, caractérisée en ce que, en dehors de la sollicitation de la force extérieure, toute l'huile de graissage est refoulée par la pompe à huile vers le circuit de graissage et que l'huile déviée vers le ou les circuits secondaires, en réponse à la sollicitation de la force extérieure, est entièrement restituée au circuit de graissage, de sorte que toute l'huile débitée par la pompe à huile parvient au circuit de graissage, sans être remise en pression par ladite pompe à huile.

La force extérieure peut être, d'une manière connue en soi, la pression d'un second fluide, lorsque celle-ci excède un seuil prédéterminé.

Le procédé peut être appliqué à la réalisation

2

d'un circuit d'assistance de freinage d'un véhicule, auquel cas le circuit secondaire est un circuit d'assistance de freinage et le second fluide est du fluide de freinage.

Pour la mise en oeuvre du procédé selon l'invention, on utilise un dispositif comprenant, dans un véhicule ou une machine à moteur, une pompe à huile, un circuit de graissage, des moyens appliquant une force extérieure à des moyens obturateurs ou de distribution, et au moins un circuit secondaire, ladite pompe à huile alimentant le circuit de graissage et au moins partiellement le circuit secondaire, caractérisé en ce que la pompe à huile est connectée au circuit de graissage et au circuit secondaire, eux-mêmes connectés entre eux et en ce que, pendant l'action de la force extérieure, les moyens obturateurs ou de distribution interrompent au moins en majeure partie la communication entre la pompe de graissage et le circuit de graissage, avec une augmentation de pression correspondante dans le circuit secondaire.

Le procédé selon l'invention est applicable dans les systèmes de commande de pression de fluides, les ralentisseurs, les systèmes de graissage sous pression, les systèmes d'injection de carburant, les systèmes economiseurs de carburant et, plus particulièrement, les systèmes d'assistance de freinage.

Dans ce dernier cas, le circuit secondaire est le circuit d'assistance de freinage et le second fluide est le liquide de freinage.

Dans une première forme d'exécution pratique, les moyens obturateurs sont constitués par un pointeau soumis à l'action antagoniste du second fluide, d'une part, et d'un ressort de rappel et de la pression de la pompe à huile, d'autre part.

Dans une seconde forme d'exécution pratique, plus performante, les moyens obturateurs sont constitués par un piston creux soumis à l'action antagoniste du second fluide, d'une part, et d'un ressort de rappel et de la pression de la pompe à huile, d'autre part, l'intérieur du piston creux étant en communication avec le refoulement de ladite pompe et étant susceptible, selon sa position, d'être en communication avec ledit circuit de graissage.

Plus précisément, tant que la pression du second fluide n'excède pas la force du ressort de rappel, la position du piston creux est telle qu'une rainure pratiquée au travers de sa paroi se trouve en vis-à-vis d'un canal conduisant au circuit de graissage, ce qui permet à l'huile de graissage refoulée par la pompe de passer vers ledit circuit de graissage, tandis que lorsque la pression du second fluide excède la force du ressort de rappel, la position du piston creux est telle que l'ouverture de la rainure se trouve décalée par rapport au canal conduisant au circuit de graissage et obturée, ce qui interrompt le passage de l'huile de graissage vers ledit circuit de graissage.

Les moyens obturateurs peuvent être actionnés de toute manière convenable, manuellement ou automatiquement, par des organes pouvant aussi bien être à pression, qu'électriques, magnétiques ou mixtes.

Avantageusement, les moyens obturateurs sont actionnés par un séparateur de fluides déformable, à l'intérieur duquel s'exerce la pression du second fluide.

Le seuil de pression à surmonter par le second fluide correspond donc à la force du ressort de rappel antagoniste auquel sont soumis les moyens obturateurs augmentée de la pression d'huile de la pompe à huile.

Dans l'application assistance de freinage, pour assurer un graissage satisfaisant du moteur au ralenti, même si le conducteur laisse le pied sur la pédale de frein, par exemple dans le cadre d'un arrêt en côte à un feu rouge, il est indispensable de prévoir une rainure de fuite d'huile de graissage vers le circuit de graissage.

A cette fin, la rainure doit avoir un diamètre suffisant pour que la lubrification soit acceptable au ralenti, sans pour autant entraîner une fuite trop importante à haute pression.

Ces objectifs contradictoires sont satisfaits selon l'invention qui prévoit des moyens susceptibles d'assurer une fuite de l'huile de graissage vers le circuit de graissage lorsque la pression de l'huile refoulée par la pompe à huile devient inférieure à un seuil prédéterminé.

Les moyens en question peuvent être constitués par un petit piston creux logé à l'intérieur du piston creux obturateur et soumis à l'action antagoniste d'un ressort de rappel et de la pression de l'huile de graissage à l'intérieur du piston creux obturateur. Tant que cette pression ne s'abaisse pas au-dessous d'un certain seuil critique pour la lubrification du moteur, elle repousse le petit piston vers une position telle qu'une rainure traversant la paroi de ce dernier se trouve obturée. Il n'y a donc pas de fuite. Si la pression s'abaisse au-dessous du seuil critique, le ressort de rappel surmonte cette pression et déplace le petit piston creux vers une position pour laquelle la rainure débouche dans un canal conduisant au circuit de graissage il se produit alors une fuite de sécurité vers ce circuit.

Le circuit d'assistance de freinage peut comprendre une chambre haute pression présentant un orifice d'entrée pour l'huile de graissage et dans laquelle est logé un séparateur de fluides déformable renfermant un ressort de rappel, ledit séparateur de fluides comportant une tubulure d'entrée et de sortie pour un troisième fluide débouchant à l'extérieur de la chambre haute pression.

Le troisième fluide évoqué ci-dessus peut être de même nature que le second fluide, c'est-à-dire être du liquide de freinage. Dans tous les cas, on utilise un fluide ayant des caractéristiques telles qu'il supporte les températures auxquelles peut s'élever l'huile de graissage dans des conditions de fonctionnement normales.

La tubulure d'entrée et de sortie du séparateur de fluides de la chambre haute pression met ce séparateur de fluides en communication avec un vérin d'assistance renfermant un piston, dont la tige agit, dans le même sens que la pédale de freins, sur le levier de commande du piston du maître cylindre du circuit de freinage lorsque ledit troisième fluide est admis dans le vérin d'assistance.

Selon une autre forme d'exécution, le circuit secondaire, qui peut être un circuit d'assistance de freinage ou un circuit alimentant un récepteur quelconque, comprend, d'une part, un canal d'assistance débouchant à l'une des extrémités d'un vérin d'assistance, comprenant un piston dont la tige agit, dans le même sens que la pédale de frein, sur le levier de commande du piston du maître cylindre du circuit de freinage lorsque l'huile de graissage est admise depuis le canal d'assistance dans ledit vérin et, d'autre part, un canal de restitution branché à l'autre extrémité dudit vérin d'assistance et mettant ce vérin en communication avec le circuit de graissage.

Ainsi, le piston du vérin d'assistance reçoit la pression d'assistance du côté pédalier et la pression de graissage du côté opposé.

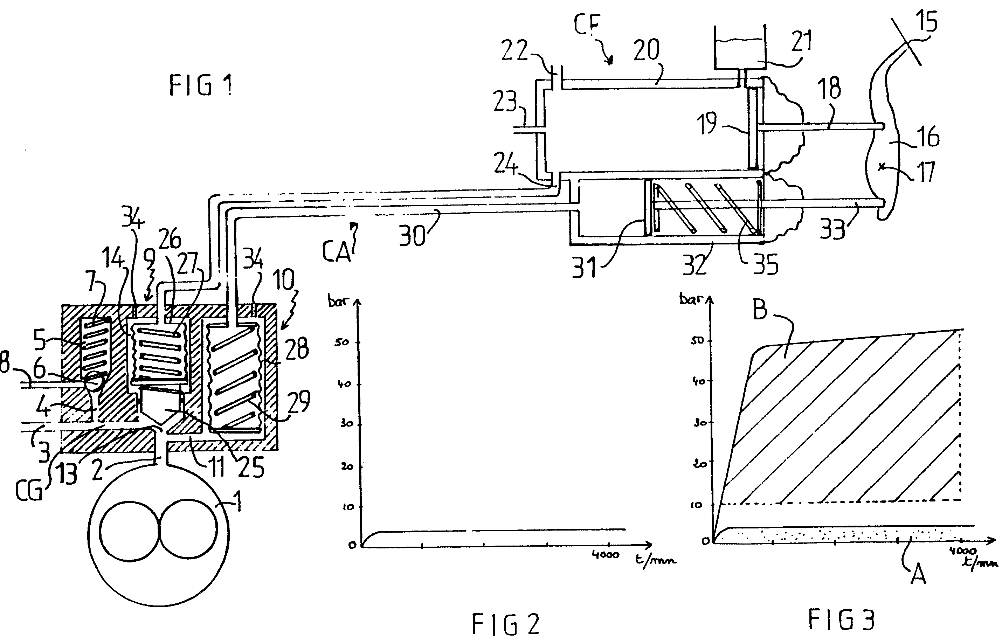

Cette solution présente plusieurs avantages
- elle supprime la nécessité de prévoir un ressort de rappel pour le piston du vérin d'assistance,
- elle élargit la plage des pressions utilisables: il n'y a plus de zone neutre entre les zones A et B de la figure 3 expliquée plus loin,
- elle restitue immédiatement au circuit de graissage toute quantité d'huile prélevée pour l'assistance.

Il y a lieu de noter que si l'on appelle:
- s1: la section des moyens obturateurs recevant la pression du fluide de freinage,
- s2: la section des moyens obturateurs recevant la pression de l'huile de graissage,
- L1: le bras de levier de l'axe du levier de la pédale du frein à la tige du piston du maître cylindre,
- L2: le bras de levier de l'axe du levier de la pédale de frein à la tige de piston du vérin d'assistance,
- S1: la section du maître-cylindre,
- S2: la section utile du vérin d'assistance, le coefficient d'assistance dépend des rapports s1/s2, L1/L2, S1/S2.

On peut donc, dans la pratique, augmenter le coefficient d'assistance jusqu'au moment où apparaît le blocage des moyens obturateurs et des roues du véhicule.

Pour qu'un tel blocage ne se produise pas, il y a lieu de respecter la condition :

$$\frac{s_2}{s_1} \cdot \frac{L_2}{L_1} < \frac{S_2}{S_1}$$

Le ressort de rappel qui tend à ouvrir les moyens obturateurs, s'il est de force suffisante, contribue à reculer les conditions d'auto-blocage.

La présente invention, comparée aux systèmes d'assistance par centrale hydraulique indépendante présente l'avantage d'un gain de poids, d'une réduction de la consommation (de l'ordre de 0,6 litre/heure), d'un gain en simplicité, d'une plus grande fiabilité et d'un prix de revient attrayant.

Comparée au système d'assistance par la pression de graissage, l'invention - contrairement à la technique connue - ne fait pas augmenter la consommation du moteur car elle n'exige pas de débit supplémentaire de la pompe à huile et elle permet une réduction très importante du poids, du volume et du prix du système.

De plus, avec l'invention, la pompe à huile se comporte en tant que ralentisseur au moment du freinage en absorbant plus de quinze fois plus d'énergie que lorsque le frein n'est pas sollicité en venant ainsi coopérer à la décélération du véhicule, ce qui n'est pas le cas avec les systèmes d'alimentation en parallèle. Selon l'invention, il n'est plus besoin de vanne de modulation coûteuse pour adapter l'intensité du freinage au désir du conducteur. La sécurité est infiniment supérieure a celle offerte par le système d'assistance utilisant, selon l'art antérieur, la pression de graissage par un branchement en parallèle.

L'invention est décrite ci-après en référence aux dessins annexés dans lesquels:
- la figure 1 illustre l'application de l'invention à la réalisation d'un circuit d'assistance de freinage utilisant un dispositif de manoeuvre de pression de fluide selon une première forme d'exécution,
- la figure 2 est une représentation graphique de la courbe de pression fournie par la pompe à huile dans le circuit d'assistance et cela seulement lorsque la pédale de freins est sollicitée, laquelle pression est fonction de la vitesse de rotation du moteur, selon l'art antérieur,
- la figure 3 est une représentation graphique de la courbe de pression de la pompe à huile en fonction de la vitesse de rotation du moteur, selon l'invention,
- la figure 4 représente une autre forme d'exécution du dispositif de manoeuvre de pression de fluide selon l'invention utilisable dans le schéma de la figure 1, et
- la figure 5 représente une autre réalisation de circuit d'assistance de freinage selon l'invention.

Si l'on se reporte à la figure 1, on voit un ensemble comprenant un circuit de graissage CG, un circuit de freinage CF et un circuit d'assistance de freinage CA combinés.

Plus précisément, le circuit de graissage CG comporte une pompe à huile 1, dont le débit est fonction de la vitesse de rotation du moteur et dont le refoulement 2 alimente une tubulure 3 de répartition de l'huile.

La tubulure 3 comporte une dérivation 4 débouchant dans un clapet de décharge 5 dont la bille 6, soumise à l'action du ressort 7, obture normalement la dérivation 4, tout en étant susceptible d'être repoussée en libérant l'ouverture de cette dérivation 4 et en permettant le passage de l'huile vers le tuyau de décharge 8 si la pression de cette huile, dans la tubulure 3, excède la force du ressort 7.

Tel qu'il vient d'être décrit, ce circuit de graissage est classique.

Selon l'invention, cependant, il présente la particularité d'alimenter également - un dispositif de manoeuvre de pression de fluide désigné, d'une manière générale, par la référence 9, et une chambre haute pression désignée dans son ensemble par la référence 10. A cet effet, il est prévu, entre le refoulement 2 de la pompe 1 et la tubulure 3 de répartition d'huile, une dérivation 11 vers la chambre haute pression 10 et une communication 13 avec l'intérieur de la chambre 14 du dispositif de manoeuvre de pression de fluide 9.

Le circuit de freinage CF comporte une pédale de freins 15, réunie par l'intermédiaire d un levier 16, pivotant autour d'un axe 17, à la tige 18 du piston 19 d'un maître cylindre 20. Ce dernier est alimenté en fluide de freinage par un réservoir 21 et il comporte deux tubulures 22 et 23 de refoulement de fluide de freinage vers des récepteurs non représentés.

Là encore, tel qu'il vient d'être décrit, le circuit de freinage est classique.

Selon l'invention, cependant, le maître cylindre 20 comporte une troisième tubulure de refoulement 24 qui est réunie au dispositif de manoeuvre de pression de fluide 9.

La chambre 14 du dispositif de manoeuvre de pression de fluide 9 renferme un pointeau 25 susceptible de venir obturer partiellement ou totalement la communication 13 entre le refoulement 2 de la pompe 1 et la tubulure de répartition de l'huile de graissage 3. Ce pointeau dépend d'un séparateur de fluides 26 déformable, maintenu comprimé par un ressort de rappel 27 et en communication avec la tubulure 24 du maître cylindre 20. Il est à noter que la section du pointeau soumise à la pression de l'huile de graissage n'est pas nécessairement la même que celle qui est soumise à la pression de l'huile de freinage.

La chambre haute pression 10, qui est en communication avec le refoulement de la pompe à huile 1 renferme également un séparateur de fluides déformable 28, normalement dilaté par un ressort de rappel 29 et en communication par la conduite 30 avec un vérin d'assistance 32 comprenant un piston 31 dont la tige 33 est réunie au levier 16 en un point opposé à celui de la tige 18 du maître cylindre 20 par rapport à l'axe de pivotement 17 du levier 16. Un ressort de rappel 35 tend à contracter le vérin d'assistance 32.

Les chambres 14 et 10 sont pourvues, à leur partie supérieure, d'une pastille poreuse 34 formant purge d'air.

Le fonctionnement de l'ensemble est le suivant:

Lorsque le moteur tourne sans que le frein soit sollité, le pointeau 25 est maintenu relevé par le ressort 27 et l'huile de graissage, refoulée par la pompe 1, d'une part, alimente le circuit de graissage par la, tubulure 3 et, d'autre part, remplit les chambres 14 et 10. La pression de l'huile débitée par la pompe 1 est réglée par le clapet de décharge 5 à une valeur qui, pour une température normale de fonctionnement, peut monter jusqu'à 3 ou 4 bars. Cette pression est insuffisante pour comprimer le ressort 29 du séparateur de fluides 28 de la chambre haute pression 10 ; le force de ce ressort demande, en effet, pour être surmontée une pression de 8 à 10 bars.

Lorsque, l'opérateur sollicite la pédale de freins, la pression augmente dans le maître cylindre 20, le liquide de freinage est refoulé dans les tubulures 22 et 23 qui alimentent les récepteurs de freinage et également dans la tubulure 24 en communication avec le séparateur de fluides 26 du dispositif de manoeuvre de pression de fluide 9. Il s'ensuit la dilatation de ce séparateur 26 et l'abaissement du pointeau 25 qui tend à obturer la communication 13. La pression d'huile augmente alors notablement dans la chambre haute pression 10, ce qui provoque la compression du séparateur de fluides 28. Le débit du clapet de décharge 5 diminue une fraction de seconde.

Le fluide contenu dans le séparateur de fluides 28 est refoulé par la conduite 30 vers le vérin d'assistance 32 en repoussant la tige de piston 33 et, par suite, le levier 16 qui pivote dans le même sens que lorsqu'il est repoussé par la pédale 15. Le freinage s'en trouve donc assisté.

L'huile étant incompressible, le débit de la pompe 1 reste le même, mais la pression en aval de la pompe 1 étant plus de quinze fois supérieure à ce qu'elle est en l'absence de freinage, il faudra également une énergie quinze fois supérieure pour entraîner la rotation de la pompe à huile. Celle-ci se comportera alors comme un ralentisseur, venant ainsi coopérer à la décélération du véhicule. Le circuit de graissage situé en aval du clapet de décharge 5 aura une pression qui restera stabilisée.

Comme on l'a indiqué plus haut, au lieu d'utiliser des pressions de 3 à 4 bars donnant une courbe de pression de la pompe à huile en fonction de la vitesse de rotation du moteur telle que représentée à la figure 2, on peut obtenir, selon l'invention, des pressions allant jusqu'à 50 bars, ou même davantage, au moment du freinage comme le montre la figure 3. Sur cette figure 3, la courbe de la figure 2 a été reportée. La partie grisée par des pointillés et désignée par la lettre A correspond à la pression utilisable selon l'art antérieur et la partie hachurée et désignée par la lettre B est la pression utilisée selon l'invention.

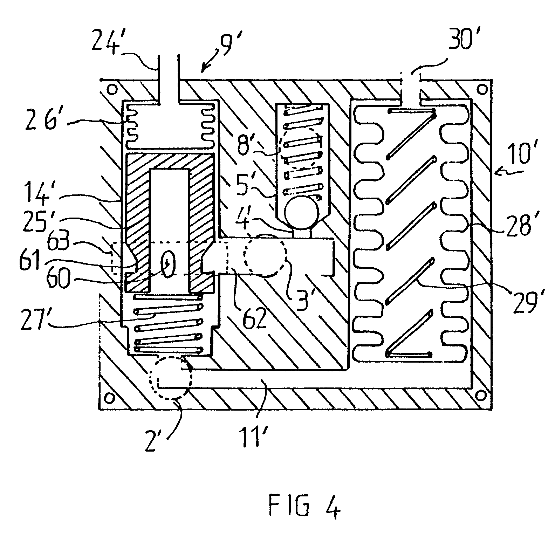

Si l'on se reporte à la figure 4, on voit un dispositif de manoeuvre de pression de fluide 4, susceptible d'être avantageusement substitué au dispositif 9 de la figure 1.

Pour faciliter la compréhension, on a utilisé, à la figure 4, les mêmes références numériques que celles utilisées à la figure 1, pour désigner les éléments équivalents, en les accompagnant toutefois du symbole prime.

La principale différence entre le dispositif 9 de la figure 1 et le dispositif 9' de la figure 4 est le remplacement du pointeau 25 par un piston creux obturateur 25'. Ce piston creux comporte des lumières 60 qui font correspondre l'intérieur du piston avec une rainure extérieure 61. Au repos, c'est-à-dire en l'absence de freinage, un ressort 27' maintient le piston 25' en une position telle que la rainure 61 débouche dans un canal 62 conduisant à la tubulure de répartition d'huile 3' et à la dérivation 4' menant au clapet de décharge 5'. Il peut être prévu une butée, non représentée, pour limiter le déplacement vers le haut du piston creux 25' sous l'effet dit ressort 27'.

A l'opposé du ressort 27', le piston creux 25' est soumis à l'action d'un séparateur de fluide 26' analogue au séparateur 26 de la figure 1. Lorsque la pression dit fluide de freinage dans le séparateur de fluide 26' excède la force du ressort 27', le séparateur de fluide 26' repousse le piston creux obturateur 25' en réduisant jusqu'à éventuellement la supprimer, la zone de coïncidence entre la rainure 61 et le canal 62.

La pression de l'huile de graissage augmente alors dans la chambre 10' et lorsque cette pression est supérieure à la force du ressort 29', le séparateur de fluide 28', en se comprimant, refoule le fluide de freinage par la conduite 30'.

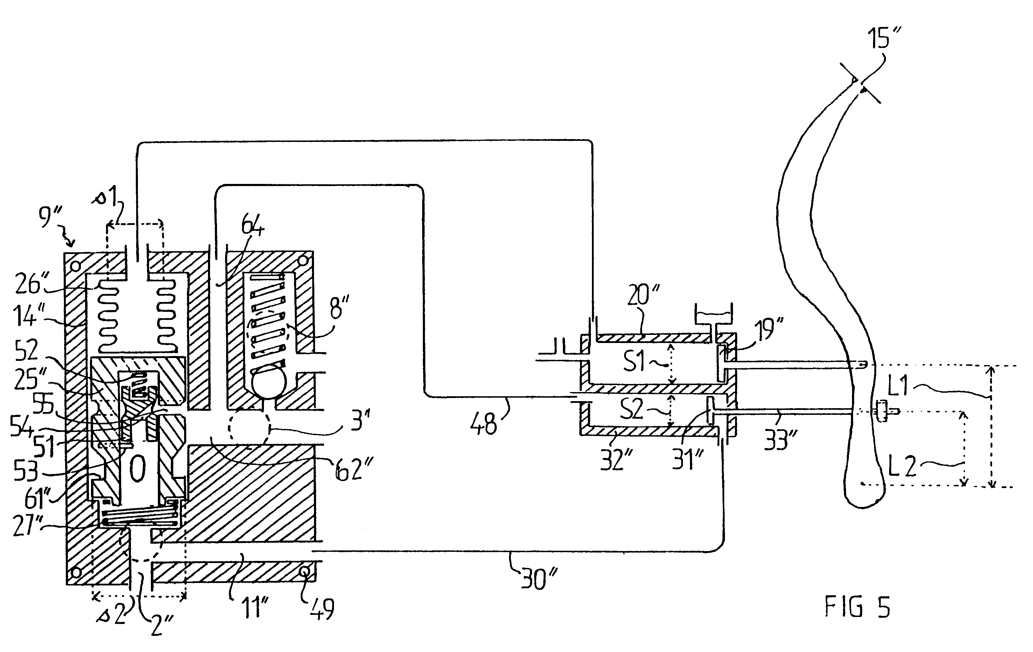

Comme indiqué précédemment, à des fins de sécurité, il est nécessaire de prévoir des moyens qui assurent une lubrification satisfaisante même si le conducteur appuie sur la pédale de frein de manière prolongée. Ces moyens n'ont pas été représentés à la figure 4 pour ne pas nuire à la clarté de cette figure. Ils sont cependant représentés à la figure 5 dont le dispositif de manoeuvre de pression de fluide 9'' utilise un piston creux 25'' semblable au piston 25' de la figure 4. A la figure 5, on a utilisé les mêmes références qu'aux figures 1 et 4 pour désigner les éléments similaires en les accompagnant, toutefois, du symbole seconde.

Comme il ressort de la figure 5, un petit piston creux 51 est logé à l'intérieur du piston creux obturateur 25'' qui forme chambre. Ce petit piston 51 reçoit, à sa partie supérieure, un ressort 52 qui prend appui sur le fond du piston creux obturateur 25'' et qui tend à repousser le petit piston 51 contre une broche 53. Il est prévu, dans la paroi du piston creux obturateur 25'', une rainure 55 susceptible de venir en coïncidence avec le canal 62'' et, dans la paroi du petit piston creux 51, une rainure 54 susceptible de venir en coïncidence avec la rainure 55.

Au moment du freinage, avec le moteur tournant à un régime situé dans se plage normale d'utilisation, pression de l'huile à l'intérieur du piston creux obturateur 25'' augmente et devient supérieure à la force du ressort 52 et le petit piston 51 se trouve repoussé de telle sorte que le canal 54 ne se trouve plus en coïncidence avec la rainure 55. Les moyens assurant un passage d'huile de section suffisante pour assurer le graissage du moteur au ralenti se trouvent donc obturés. Si, par suite du freinage, la pression baisse à l'intérieur du piston creux obturateur 25'', au point de devenir inférieure a la force de ressort 52, ce dernier repousse le petit piston 51 contre la broche 53 et le canal 54 se trouve en communication avec la rainure 55. Une fuite d'huile peut alors se produire vers le circuit de graissage assurant une lubrification satisfaisante même si le conducteur laisse le pied sur la pédale de frein pendant une période prolongée.

Le circuit représente à la figure 5 diffère également du circuit représente à la figure 1 par le fait qu'il n'est pas prévu de chambre haute pression 10. Plus précisément, la dérivation 11'' est réunie directement à l'une des extrémités du vérin d'assistance 32'' tandis que l'autre extrémité de ce même vérin est réunie par un canal de restitution 48 à une dérivation 64 débouchant dans le canal 62''.

Au repos, c'est-à-dire en l'absence de freinage, l'huile de graissage est envoyée non seulement vers le circuit de graissage mais également vers le vérin d'assistance 32'' par le canal de restitution 48. Ce faisant, elle repousse le piston 31'' dans la position représentée à la figure 5. En cas de freinage, l'huile sous pression est injectée par la conduite 30'' dans le vérin d'assistance 32'' en repoussant le piston 31''. Tandis que celui-ci exerce sur le levier 16'' une force dans la même direction que celle appliquée par la pédale de frein 15'', il refoule l'huile de graissage par le canal de restitution 48 vers le circuit de graissage.

Les tubulures 2'' , 3'' et 8'' du dispositif 9'' débouchent à l'arrière afin de permettre un branchement rapide par fixation de l'ensemble qui constitue une centrale, contre le bloc moteur qui comportera des tubulures correspondantes et en regard. Des trous 49 permettent de passer des vis de fixation. En variante, ces trous peuvent se confondre avec une ou plusieurs des tubulures 2'', 3'', 8'' et les vis de fixation peuvent être tubulaires (c'est-à-dire remplir simultanément la fonction de fixation et la fonction de canal). On notera que la tige 33'' du vérin d'assistance 32'' à la figure 5 peut rester immobile lorsque l'on appuie sur la pédale de frein 15'' tandis que le moteur ne tourne pas, ce, afin de ne pas absorber de puissance comme sur la plupart des systèmes existants; les précautions classiques seront prises afin que le système ne soit pas trop bruyant.

D'une façon générale, on notera, à propos du dispositif décrit à la figure 5, qu'il transmet aux récepteurs du ou des circuits secondaires qui lui sont associés, la pression de la pompe à huile du véhicule diminuée de la pression de graissage ce qui permet d'avoir un graissage continu. Dans ce dispositif, les circuits secondaires sont ouverts et ainsi la totalité de l'huile débitée par la pompe passe par le circuit de graissage, soit directement, soit par l'intermédiaire d'un circuit dit de restitution. Il est donc tout à fait inutile de prévoir une pompe à huile d'un débit qui serait excessif par rapport aux besoins de la lubrification.

On a porté, sur la figure 5, les paramètres s1, s2, L1, L2 et S1, S2 utilisés dans l'équation dont le respect garantit le non blocage du système. On notera que la représentation du paramètre s1 ne peut être rigoureuse dans le cas de l'utilisation d'un separateur de fluide. Sa véritable équivalence en section est indiquée par le constructeur du séparateur.

Dans un but de standardisation des composants, on pourra ajouter une gorge 63 (figure 4) sur le corps du dispositif 9' afin d'autoriser un débit plus important et donc d'élargir la gamme de moteurs sur lesquels un dipositif identique puisse convenir.

Il va sans dire que toutes les dispositions habituelles prises en matière hydraulique (évacuation des fuites éventuelles de fluides par décompression, non venue en contact de fluides de nature différente, etc... ) doivent être prises; ces mesures étant classiques, elles n'ont pas à être décrites.

Le dispositif de manoeuvre de pression de fluide selon l'invention pourrait être construit en alliage léger avec chemisage fonte et pourra regrouper:
- le départ haute pression 11, 11', 11"
- les moyens obturateurs 25, 25', 25"
- le canal de restitution 48
- le clapet de décharge classique 5, 5', 5"
- la chambre haute pression 10, 10'
- un manocontact de pression d'huile, et
- le filtre à huile classique du moteur, ou une partie seulement de ses organes.

Il est bien entendu que le mode de mise en oeuvre du procédé selon l'invention et les formes d'exécution du dispositif pour cette mise en oeuvre n'ont été décrits qu'à titre d'exemples et que diverses modifications peuvent leur être apportées sans sortir du cadre de l'invention. En particulier, les conduites raccordant respectivement le maître cylindre au dispositif de manoeuvre de pression de fluide et le vérin d'assistance de freinage à la chambre haute pression peuvent être en plusieurs parties et elles peuvent comporter une boucle de dilatation pour absorber les vibrations.

La chambre à cylindre creux obturateur qui constitue une vanne du modèle à réaction de pression de graissage pourrait, selon l'utilisation envisagée, être du modèle distributeur, à tiroir, à simple ou double effet et à inversion combinée, par exemple, pour alimenter un vérin capable de manoeuvrer la benne d'un petit tracteur de chantier.

Par ailleurs, il est clair que l'on peut incorporer au circuit de freinage assisté tous les perfectionnements courants tels que maître cylindre de freins à double circuit de freinage, systèmes répartiteurs de freinage, vanne détendeur de modulation, accumulateur de pression, limiteur de pression, systèmes antiblocage, pied déformable entre tige de commande du maître cylindre et pédale afin d'améliorer encore la sensation de dosage dit freinage, etc ... Le dispositif de commande de pression petit être équipé ou non d'un piston en matière plastique afin d'en limiter le bruit de fonctionnement. La position du vérin d'assistance peut être différente de celle représentée, par exemple dans le prolongement du maître cylindre. Les séparateurs de fluides déformables peuvent aussi bien être remplacés par des cylindres, pistons et systèmes d'étanchéité. L'assistance à la pédale de freins peut aussi être réalisée directement sur le maître cylindre. Le clapet de décharge, le dispositif de manoeuvre de pression de fluide et la chambre haute pression, d'une part, tout comme le maître cylindre et le vérin d'assistance de freinage, d'autre part, pourraient respectivement ne pas être regroupés en un seul bloc; quoique c'est là la solution que l'on préfère.

Il est bien entendu que l'invention ne se limite pas aux véhicules. Elle peut être appliquée à toute machine à moteur, telle qu'un engin de chantier, comportant un circuit de graissage. En particulier, elle pourrait servir à alimenter, dans une bétonnière, un vérin chargé d'élever un godet pour accélérer le remplissage de la cuve.

## Revendications

1. Procédé de manoeuvre de la pression de l'huile de graissage refoulée par une pompe à huile en direction d'un circuit de graissage, dans un véhicule ou une machine à moteur, qui consiste à dévier au moins une partie de l'huile de graissage vers au moins un circuit secondaire pour augmenter la pression dans ledit circuit secondaire en réponse à une force extérieure, caractérisé en ce qu en dehors de la sollicitation de la force extérieure, toute l'huile de graissage est refoulée par la pompe à huile vers le circuit de graissage et que l'huile déviée vers le ou les circuits secondaires, en réponse à la sollicitation de la force extérieure, est entièrement restituée au circuit de graissage, de sorte que toute l'huile débitée par la pompe à huile parvient au circuit de graissage, sans être remise en pression par ladite pompe à huile.

2. Procédé selon la revendication 1, caractérisé en ce que la force extérieure est, d'une manière connue en soi, la pression d'un second fluide, lorsque celle-ci excède un seuil prédéterminé.

3. Procédé selon la revendication 2, appliqué à la réalisation d'un circuit d'assistance de freinage d'un véhicule, caractérisé en ce que ledit circuit secondaire est un circuit d'assistance de freinage (CA) du véhicule et en ce que ledit second fluide est du fluide de freinage.

4. Dispositif pour la mise en oeuvre du procédé selon la revendication 1 ou 2, comprenant, dans un véhicule ou une machine à moteur, une pompe à huile (1), un circuit de graissage (CG), des moyens appliquant une force extérieure à des moyens obturateurs ou de distribution, et au moins un circuit secondaire (8), ladite pompe à huile alimentant le circuit de graissage et au moins partiellement le circuit secondaire, caractérisé en ce que la pompe à huile (1) est connectée au circuit de graissage (CG) et au circuit secondaire (8), eux-mêmes connectés entre eux, et en ce que, pendant l'action de la force extérieure, les moyens obturateurs ou de distribution interrompent au moins en majeure partie la communication entre la pompe de graissage et le circuit de graissage, avec une augmentation de pression correspondante dans le circuit secondaire.

5. Dispositif selon la revendication 4 pour la mise en oeuvre du procédé selon la revendication 3, caractérisé en ce que le circuit secondaire comportant un second fluide, est le circuit d'assistance de freinage (CA).

6. Dispositif selon la revendication 4 ou 5, caractérisé en ce que les moyens obturateurs sont constitués par un pointeau (25) soumis à l'action antagoniste du second fluide, d'une part, d'un ressort de rappel (27) et de la pression de la pompe à huile (1) d'autre part.

7. Dispositif selon la revendication 4 ou 5, caractérisé en ce que les moyens obturateurs sont constitués par un piston creux (25', 25") soumis à l'action antagoniste du second fluide, d'une part, et d'un ressort de rappel (27', 27") et de la pression de la pompe à huile (1), d'autre part, l'intérieur du piston creux (25', 25") étant en communication avec le refoulement de ladite pompe (1) et étant susceptible, selon sa position, d'être en communication avec ledit circuit de graissage (CG).

8. Dispositif selon l'une quelconque des revendications 4 à 7, caractérisé en ce que les moyens obturateurs ( 25, 25', 25") sont actionnés par un séparateur de fluides déformable (26, 26', 26") à l'intérieur duquel s'exerce la pression du second fluide.

9. Dispositif selon l'une quelconque des revendications 4 à 8, caractérisé en ce qu'il comporte des moyens (51, 54, 55) susceptibles d'assurer une fuite de l'huile de graissage vers le circuit de graissage (CG) lorsque la pression de l'huile refoulée par la pompe à huile devient inférieure à un seuil prédéterminé.

10. Dispositif selon l'une quelconque des revendications 5 à 9, caractérisé en ce que le circuit d'assistance de freinage (CA) comprend une chambre haute pression (10, 10') présentant un orifice d'entrée pour l'huile de graissage et dans laquelle est logé un separateur de fluides déformable (28, 28') renfermant un ressort de rappel (29, 29'), ledit séparateur de fluides (28, 28') comportant une tubulure d'entrée et de sortie pour un troisième fluide débouchant à l'extérieur de la chambre haute pression (10, 10').

11. Dispositif selon la revendication 8, caractérisé en ce que la tubulure d'entrée et de sortie du séparateur de fluides (28, 28') de la chambre haute pression (10, 10') met ce séparateur de fluides (28, 28') en communication avec un vérin d'assistance (32) renfermant un piston (31) dont la tige (33) agit, dans le même sens que la pédale de freins (15), sur le levier de commande (16) du piston (19) du maître cylindre (20) du circuit de freinage lorsque ledit troisième fluide est admis dans le vérin d'assistance (32).

12. Dispositif selon la revendication 11, caractérisé en ce que le troisième fluide est de même nature que le second fluide.

13. Dispositif selon les revendications 4 à 9, caractérisé en ce que le circuit secondaire comprend, d'une part, un canal d'assistance (30") débouchant à l'une des extrémités d'un vérin d'assistance ( 32") , comprenant un piston (31") dont la tige (33") agit, dans le même sens que la pédale de freins (15"), sur le levier de commande (16") du piston (19") du maître cylindre (20") du circuit de freinage lorsque l'huile de graissage est admise depuis le canal d'assistance (30") dans ledit vérin (32") et, d'autre part, un canal de restitution (48) branché à l'autre extrémité dudit vérin d'assistance (32") et mettant ce vérin en communication avec le circuit de graissage (CG).

14. Dispositif selon l'une quelconque des revendications 11 à 13, caractérisé en ce qu'il est proportionné de telle sorte qu'il satisfasse à la condition:

$$\frac{S2}{S1} \cdot \frac{L2}{L1} < \frac{s2}{s1}$$

dans laquelle:
- s1: est la section des moyens obturateurs recevant la pression du liquide de freinage,
- s2: est la section des moyens obturateurs recevant la pression de l'huile de graissage,
- L1: est le bras de levier de l'axe du levier de la pédale du frein à la tige du piston du maître cylindre,
- L2: est le bras de levier de l'axe du levier de la pédale de frein à la tige de piston du vérin d'assistance,
- S1: est la section du maître-cylindre,
- S2: est la section utile du vérin d'assistance.

**Patentansprüche**

1. Verfahren zum Steuern des Drucks von Schmieröl, das von einer Ölpumpe in Richtung eines Schmierkreises gefördert wird, in einem motorgetriebenen Fahrzeug oder einer motorgetriebenen Maschine, umfassend: Abzweigen wenigstens eines Teils des Schmieröls in wenigstens einen Sekundärkreis zur Verstärkung des Drucks in dem Sekundärkreis in Abhängigkeit von einer äußeren Kraft, dadurch <u>gekennzeichnet,</u> daß über die Belastung durch die äußere Kraft hinaus alles Schmieröl durch die Ölpumpe in den Schmierkreis gefördert wird und daß das in den oder die Sekundärkreis(e) abgezweigte Öl in Abhängigkeit von der Belastung durch die äußere Kraft im Schmierkreis vollständig ersetzt wird derart, daß alles Öl, das von der Ölpumpe abgegeben wird, im Schmierkreis erscheint, ohne im Druck durch die Ölpumpe verschoben zu werden.

2. Verfahren nach Anspruch 1, dadurch <u>gekennzeichnet,</u> daß die äußere Kraft in an sich bekannter Weise der Druck eines zweiten Fluides ist, wenn dieser einen vorbestimmten Schwellenwert übersteigt.

3. Verfahren nach Anspruch 2, angewendet auf die Ausführung eines Fahrzeugbremsverstärkerkreises, dadurch gekennzeichnet, daß der Sekundärkreis ein Bremsverstärkerkreis (CA) des Fahrzeugs ist und daß das zweite Fluid Bremsfluid ist.

4. Vorrichtung zur Ausführung des Verfahrens nach Anspruch 1 oder 2, enthalten in einem motorgetriebinen Fahrzeug oder einer motorgetriebenen Maschine, eine Ölpumpe (1) einen Schmierkreis (CG), eine Einrichtung, die eine äußere Kraft auf Verschließeinrichtungen oder Verteilereinrichtungen ausübt, und wenigstens einem Sekundärkreis (8), wobei die Ölpumpe den Schmierkreis und wenigstens teilweise den Sekundärkreis versorgt, dadurch gekennzeichnet, daß die Ölpumpe (1) mit dem Schmierkreis (CG) und mit dem Sekundärkreis (8) verbunden ist, die untereinander verbunden sind, und daß während der Einwirkung der äußeren Kraft die Verschließ- oder Verteilereinrichtungen wenigstens zum Hauptteil die Verbindung zwischen der Schmierpumpe und dem Schmierkreis unterbricht, mit einer entsprechenden Verstärkung des Drucks in dem Sekundärkreis.

5. Vorrichtung nach Anspruch 4 zur Durchführung des Verfahrens nach Anspruch 3, dadurch gekennzeichnet, daß der Sekundärkreis, der ein zweites Fluid enthält, der Bremsverstärkerkreis (CA) ist.

6. Vorrichtung nach Anspruch 4 oder 5, dadurch gekennzeichnet, daß die Verschließeinrichtungen von einer Düsennadel (25) gebildet sind, die unter der Wirkung einerseits des zweiten Fluides und gegenwirkend andererseits einer Rückstellfeder (27) und des Drucks der Ölpumpe (1) steht.

7. Vorrichtung nach Anspruch 4 oder 5, dadurch gekennzeichnet, daß die Verschließeinrichtungen von einem hohlen Kolben (25', 25'') stehen, der unter der Wirkung einerseits des zweiten Fluides und gegenwirkend einer zweiten Rückstellfeder (27', 27'') und des Drucks der Ölpumpe (1) steht, wobei das Innere des hohlen Kolbens (25', 25'') mit dem Auslaß der genannten Pumpe (1) in Verbindung steht und je nach Position geeignet ist, mit dem genannten Schmierkreis (CG) in Verbindung zu sein.

8. Vorrichtung nach einem der Ansprüche 4 bis 7, dadurch gekennzeichnet, daß die Verschließeinrichtungen (25, 25', 25'') von einer verformbaren Fluidtrennwand (26, 26' , 26'') betätigt sind, in deren Inneren der Druck des zweiten Fluides wirkt.

9. Vorrichtung nach einem der Ansprüche 4 bis 8, dadurch gekennzeichnet, daß sie Einrichtungen (51, 54, 55) enthält, die dazu geeignet sind, ein Entweichen des Schmieröles gegen den Schmierkreis (CG) sicherzustellen, wenn der von der Ölpumpe gelieferte Öldruck kleiner als ein vorbestimmter Schwellenwert wird.

10. Vorrichtung nach einem der Ansprüche 5 bis 9, dadurch gekennzeichnet, daß der Bremsverstärkerkreis (CA) eine Hochdruckkammer (10, 10') enthält, die eine Schmieröleintrittsöffnung aufweist und in der eine verformbare Fluidtrennwand (28, 28') angeordnet ist, die eine Rückstellfeder (29, 29') umschließt, welche Fluidtrennwand (28, 28') einen Eingangs- und Ausgangsstutzen für ein drittes Fluid aufweist, der außerhalb der Hochdruckkammer (10, 10') endet.

11. Vorrichtung nach Anspruch 8, dadurch gekennzeichnet, daß der Eingangs- und Ausgangsstutzen der Fluidtrennwand (28, 28') der Hochdruckkammer (10, 10') die Öltrennwand (28, 28') mit einem Hilfsstellglied (32) in Verbindung setzt, das einen Kolben (31) aufweist, dessen Stange (33) im gleichen Sinne wie das Bremspedal (15) auf den Steuerhebel (16) des Kolbens (19) des Hauptzylinders (20) des Bremskreises wirkt, wenn das dritte Fluid in das Hilfsstellglied (32) eingeleitet wird.

12. Vorrichtung nach Anspruch 11, dadurch gekennzeichnet, daß das dritte Fluid von gleicher Natur ist, wie das zweite Fluid.

13. Vorrichtung nach den Ansprüchen 4 bis 9, dadurch gekennzeichnet, daß der Sekundärkreis einerseits einen Hilfskanal (30'') aufweist, der an einer der Enden eines Hilfszylinders (32'') endet, der enien Kolben (31'') aufweist, dessen Stange (33'') im gleichen Sinne wie das Bremspedal (15'') auf den Steuerhebel (16'') des Kolbens (19'') des Hauptzylinders (20') des Bremskreises wirkt, wenn das Schmieröl von dem Hilfskanal (30'') in den Zylinder (32'') eingeleitet wird, und andererseits einen Rückstellkanal (48) aufweist, der am anderen Ende des Hilfszylinders (32') angeschlossen ist und diesen Zylinder mit dem Schnurkreis (CG) in Verbindung setzt.

14. Vorrichtung nach einem der Ansprüche 1 bis 13, dadurch gekennzeichnet, daß sie so bemessen ist, daß sie die folgende Bedingung erfüllt:

$$\frac{s2}{s1} \cdot \frac{L2}{L1} < \frac{s2}{s1}$$

wobei

s1 der Querschnitt der Verschließeinrichtungen ist, der den Druck der Bremsflüssigkeit erhält, s2 der Querschnitt der Verschließeinrichtungen ist, der den Druck des Schmieröls empfängt,

L1 der Hebelarm von der Achse des Hebels des Bremspedals zur Kolbenstange des Hauptzylinders ist,

L2 der Hebelarm von der Achse des Hebels des Bremspedals zur Stange des Kolbens des Hilfzylinders ist,

s1 der Querschnitt des Hauptzylinders ist, s2 der wirksame Querschnitt des Hilfszylinders ist.

## Claims

1. Method for controlling the pressure of the lubricating oil delivered by an oil pump to a lubrication circuit, in an engine driven vehicle or machine, which consists in diverging at least a part of the lubricating oil towards at least one secondary circuit for increasing the pressure in said secondary circuit in response to an external force, characterized in that, outside action from the external force, or the lubricating oil is delivered by the oil pump to the lubricating circuit and that the oil diverged to the secondary circuit or circuits, in response to the action of the external force, is entirely restored to the lubricating circuit, so that all the oil delivered by the oil pump reaches the lubricating circuit, without being pressurized by said oil pump.

2. Method according to claim 1, characterized in that the external force is, in a way known per se, the pressure of a second fluid, when this latter exceeds a predetermined threshold.

3. Method according to claim 2, applied to the construction of a braking assistance circuit of a vehicle, characterized in that said secondary circuit is a braking assistance circuit (CA) of the vehicle and in that said second fluid is braking fluid.

4. Device for implementing the method according to claim 1 or 2, comprising, in a vehicle or engine driven machine, an oil pump (1), a lubricating circuit (CG), means for applying an external force to closure or distribution means and at least one secondary circuit (8), said oil pump feeding the lubricating circuit and at least partially the secondary circuit, characterized in that the oil pump (1) is connected to the lubricating circuit (CG) and to the secondary circuit (8), themselves connected together, and in that, during the action of the external force, the closure or distribution means interrupt at least to a major degree the communication between the lubricating pump and the lubricating circuit, with a corresponding pressure increase in the secondary circuit.

5. Device according to claim 4, for implementing the method according to claim 3, characterized in that the secondary circuit having a second fluid is the braking assistance circuit (CA).

6. Device according to claim 4 or 5, characterized in that the closure means are formed by a needle (25) subjected to the antagonistic action of the second fluid, on the one hand, of a return spring (27) and of the pressure of the oil pump (1) on the other.

7. Device according to claim 4 or 5, characterized in that the closure means are formed by a hollow piston (25', 25") subjected to the antagonistic action of the second fluid, on the one hand, and of a return spring (27', 27") and of the pressure of the oil pump (1), on the other, the inside of the hollow piston (25', 25") being in communication with the delivery side of said pump (1) and being able, depending on its position, to be in-communication with said lubricating circuit (CG).

8. Device according to any one of claims 4 to 7, characterized in the the closure means (25, 25', 25") are actuated by a deformable fluid separator (26, 26', 26") inside which the pressure of the second fluid is exerted.

9. Device according to any one of claims 4 to 8, characterized in that it includes means (51, 54, 55) capable of ensuring a lubricating oil leak towards the lubricating circuit 5 (CG) when the pressure of the oil delivered by the oil pump becomes less than a predetermined threshold.

10. Device according to any one of claims 5 to 9, characterized in that the braking assistance circuit (CA) includes a high pressure chamber (10, 10') having an inlet orifice for the lubricating oil and in which a deformable fluid separator (28, 28') is housed enclosing a return spring (29, 29'), said fluid separator (28, 28') including an inlet and outlet pipe for a third fluid opening outside the high pressure chamber (10, 10').

11. Device according to claim 8, characterized in that the inlet and outlet pipe of the fluid separator (28, 28') of the high pressure chamber (10, 10') places this fluid separator (28, 28') in communication with an assistance cylinder (32) including a piston (31) whose rod (33) acts, in the same direction as the brake pedal (15), on the control lever (16) of the piston (19) of the master cylinder (20) of the braking circuit when said third fluid is fed into the assistance cylinder (32).

12. Device according to claim 11, characterized in that the third fluid is of the same kind as the second fluid.

13. Device according to claims 4 to 9, characterized in that the secondary circuit includes, on the one hand, an assistance channel (30") opening into one of the ends of an assistance cylinder (32"), having a piston (31") whose rod (33") acts, in the same direction as the brake pedal (15"), on the control lever (16") of the piston (19") of the master cylinder (20") of the braking circuit when the lubricating oil is admitted from the assistance channel (30") into said cylinder (32") and, on the other hand, a restoration channel (48) connected to the other end of said assistance cylinder (32") and placing this cylinder in communication with the lubricating circuit (CG).

14. Device according to any one of claims 11 to 13, characterized in that it is proportioned so that it satisfies the condition:

$$\frac{s2}{s1} \cdot \frac{L2}{L1} < \frac{s2}{s1}$$

in which:
- s1: is the section of the closure means receiving the pressure of the braking fluid,
- s2: is the section of the closure means receiving the pressure of the lubricating oil,
- L1: is the lever arm from the shaft of the brake pedal lever to the rod of the piston of the master cylinder,
- L2: is the lever arm from the shaft of the brake pedal lever to the piston rod of the assistance cylinder,
- S1: is the section of the master cylinder,
- S2: is the useful section of the assistance cylinder.

0 115 991

FIG 1

FIG 2

FIG 3

FIG 4

0 115 991

FIG 5

0 115 991